# EUROPEAN PATENT SPECIFICATION

(11) **EP 0 895 968 B1**
(45) Date of publication and mention of the grant of the patent: **25.02.2004**
(21) Application number: 98114869.5
(22) Date of filing: 07.08.1998
(51) Int. Cl.: C03B 35/04, G01G 19/03

(54) **Method and machine for producing glass articles**
Verfahren und Vorrichtung zur Herstellung von Glasgegenständen
Procédé et appareil de fabrication d'objets en verre

(30) Priority: 08.08.1997 IT TO970723
(43) Date of publication of application: 10.02.1999
(73) Proprietor: BOTTERO S.p.A., 12010 Cuneo (IT)
(72) Inventor: Sesia, Carlo, 12011 Borgo San Dalmazzo (IT); Volpato, Gilberto, 12100 Cuneo (IT)
(74) Representative: Prato, Roberto

(56) References cited:
- US-A- 4 339 028

## Description

The present invention relates to a method of producing glass articles.

Glass articles are known to be produced using so-called I.S. molding machines, which normally comprise a number of molds, each for successively forming a number of glass articles similar to or different from those formed in the other molds.

Known molding machines also comprise a first conveyor common to all the molds and for feeding the glass articles to an annealing furnace; an actuating unit for transferring the glass articles from the molds to the first conveyor; and a weighing unit for weighing at least a number of the glass articles carried on the conveyor.

To weigh the glass articles, U.S. Patent n. 4 339 028 relates to a weighing unit located immediately upstream from the annealing furnace in the traveling direction of the articles, and which comprises a second conveyor following the first conveyor and for receiving the articles from the first conveyor and forming a succession of articles facing the input of the annealing furnace. The weighing unit also comprises a weighing device located at one end of the second conveyor, facing the input of the annealing furnace; and a pair of pushers, one for pushing the end article in the succession onto the weighing device and feeding the weighed articles to the annealing furnace, and the other for feeding the other articles in the succession directly to the input of the annealing furnace.

A major drawback of known weighing units of the above type is that, as opposed to any article coming off the molds, they only provide for weighing the last article in each succession facing the input of the furnace, i.e. only articles separated by a constant distance.

By failing to enable selection of the articles to be weighed, known weighing units are therefore unsuitable for use on "tandem" machines, i.e. machines in which two different types of article are produced simultaneously by respective molds, so that the succession of articles facing the input of the furnace is defined by two homogeneous groups of aligned articles. Using a known weighing unit, only the articles in one of the two groups can be weighed, unless an additional weighing unit is , provided to weigh the articles in the other group, thus increasing both production and maintenance cost.

Moreover, being necessarily located facing the input of the furnace, known weighing units of the above type inevitably result in the rejection of a large number of articles in the event the weighed article fails to fall within the given acceptance range. In which case, in fact, all the articles between the molds and the weighing device must be rejected, thus resulting in serious losses in terms of both cost and output. For the same reason, when a weigh correction is made using known weighing devices, a fairly long time lapse must be allowed before the article affected by the correction can be weighed and the effectiveness of the weight correction evaluated.

It is an object of the present invention to provide a straightforward, low-cost method of producing glass articles, designed to eliminate the aforementioned drawbacks.

According to the present invention, there is provided a method of producing glass articles, the method comprising the steps of successively forming a number of glass articles by means of a number of molds; transferring the glass articles from said molds onto a common moving conveyor for conveying the glass articles; and successively feeding some of said glass articles from said conveyor to a weighing station for weighing the glass articles; characterized by the further steps of
(a) selecting, before the glass articles are transferred onto the conveyor, said some of the glass articles to be fed to the weighing station;
(b) successively conveying the glass articles past an input of said weighing station whereby said selected some of the glass articles are fed successively through said input into the adjoining weighing station; and
(c) the weighed glass articles traveling away from the weighing station along a path other than the path traveled by the unweighed articles.

The present invention also relates to a machine for producing glass articles.

According the present invention, there is provided a machine for producing glass articles, the machine comprising a number of molds, each for successively forming a number of glass articles; a conveyor common to all the molds and movable for conveying the glass articles along a predetermined path; first transfer means for transferring the glass articles from the molds onto said common conveyor; weighing means for weighing selected some glass articles conveyed by said conveyor; said weighing means comprising a weighing station having a respective input and housing a weighing device; and second transfer means for successively transferring said selected some glass articles from the conveyor to the weighing station; characterized in that said weighing station is located immediately downstream from the last of both said molds and said first transfer means; the input of the weighing station being also located adjoining one side of said conveyor; and in that said second transfer means are operated so as to transfer the glass articles to be weighed from the conveyor through said input of the weighing station; said weighing device being adapted to feed the weighed glass articles along a path different from said predetermined path.

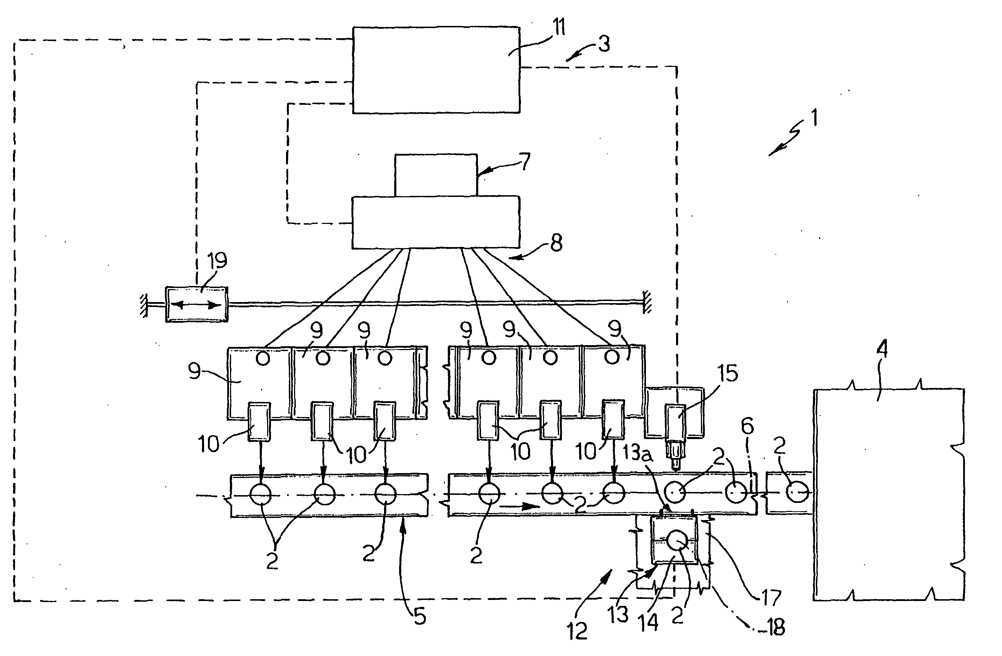

The invention will be described with reference to the accompanying drawing, which shows, schematically and substantially in blocks, a preferred non-limiting embodiment of a machine for producing glass articles in accordance with the teachings of the present invention, and forming part of a system for producing glass articles.

Number 1 in the accompanying drawing indicates as a whole a system for producing glass articles 2, and which comprises a machine 3 for producing articles 2; a known annealing furnace 4 for stabilizing articles 2; and a powered conveyor 5 for receiving articles 2 formed on machine 3 and transferring the articles to furnace 4 along a straight path 6.

More specifically, machine 3 comprises a known forming unit 7 for forming, from a mass of molten glass (not shown), a succession of glass gobs (not shown) of the same or different shape or weight; and a known distributing device 8 for feeding the glass gobs into respective adjacent molds 9 forming part of machine 3.

For each mold 9, machine 3 comprises a known mechanism (not shown) for opening and closing mold 9; and a known transfer device 10 for feeding the glass articles 2 from respective mold 9 onto conveyor 5.

As shown in the accompanying drawing, gob forming unit 7 and device 8 for distributing the gobs inside molds 9 are connected to a programmable electronic unit 11 for controlling the whole of machine 3 by synchronizing unit 7 and device 8 with each other, as well as with the mechanism (not shown) for opening and closing molds 9, and with conveyor 5.

Again with reference to the accompanying drawing, machine 3 also comprises a known ejecting member (not shown), which is located along conveyor 5, between machine 3 and annealing furnace 4, and is controlled by unit 11, which supplies the ejecting member with a control signal in response to signals member received from a number of known temperature sensor (not shown), each fitted to a respective mold 9 to detect the operating temperature of mold 9.

Machine 3 also comprises a weighing unit 12for weighing articles 2 formed in molds 9, and in turn comprising a weighing station 13, which, in the example described, is located adjoining the conveyor 5 on the opposite side of conveyor 5 to molds 9, is located upstream from the ejecting member (not shown) in the traveling direction of articles 2, and is located adjacent to, i.e. immediately downstream from, the last of both molds 9 and transfer devices 10.

Station 13 has an adjoining input 13a located to one side of conveyor 5, which thus coveys the glass articles 2 past this input 13a. The station 13 houses a known weighing device 14 - preferably a load-cell type - which is connected to electronic unit 11, and in use, supplies unit 11 with a signal corresponding to the weight of the weighed article 2.

Weighing unit 12 also comprises a second transfer means formed of a known pneumatic shift device 15 - preferably a blower - which is connected to a known compressed air supply unit (not shown), is controlled by unit 11, and is located adjacent to molds 9, on the opposite side of conveyor 5 to station 13, to successively feed at least some of articles 2 from conveyor 5 onto weighing device 14 in station 13.

Within station 13, weighing device 14 is located along a substantially vertical unloading path 18 perpendicular to the plane of the accompanying drawing, and is so formed as to feed the weighed article 2 along path 18 into a reject collecting bin 17 (shown partly) also located along path 18 and beneath weighing device 14.

With reference to the accompanying drawing, machine 3 also comprises a known automatic device 19 for cleaning and/or lubricating molds 9, and which is controlled by unit 11 to feed lubricating fluid inside each mold 9 at predetermined intervals to prevent glass articles 2 from adhering to the walls of molds 9.

In actual use, unit 11 controls unit 7 to form a succession of identical or different glass gobs, each corresponding to a given article 2; unit 11 controls device 8 to receive and feed the gobs from unit 7 into respective molds 9 according to a predetermined sequence memorized in unit 11; and the molded articles 2 are then extracted from molds 9, transferred by respective devices 10 onto conveyor 5, and fed by the conveyor along path 6 to annealing furnace 4.

As the gobs are being transferred to molds 9, unit 11 activates cleaning and/or lubricating unit 19 periodically to feed lubricating fluid inside each mold 9 to prevent the respective article 2 from adhering to the walls of the mold 9.

As articles 2 are fed along path 6, unit 11 activates device 15 to feed the selected article 2 currently facing weighing station 13 from the conveyor 5 onto weighing device 14 in station 13; device 14 determines the weight of article 2 in known manner, and supplies unit 11 with a corresponding weight signal; at this point, unit 11 opens device 14 to release the weighed article 2, which falls by force of gravity along path 18 into bin 17. At the same time, unit 11 determines whether the weight signal is within a given acceptance range, and, in the event of a negative response, adjusts unit 7 to vary the form and/or weight of the gobs produced by unit 7.

On machine 3 as described, the articles 2 to be fed to the station 13 and weighed by the device 14 may be selected directly by unit 11. In alternative, the articles 2 may be selected manually in known manner by an operator manually activating device 15. In the former case, unit 1 is so programmed as to select the articles 2 to be weighed by activating device 15 at random, or periodically at predetermined variable intervals; the unit 11 may also be programmed as the select the articles 2 to be weighed by activating device 15 periodically or at random from articles 2 formed in the same mold 9 or in each mold 9.

If different articles 2 are carried on conveyor 5, unit 11 - given the sequence in which the various glass gobs (not shown) are formed and fed into molds 9, and the output rate of molds 9 - activates device 15 to remove one or more articles 2, at random or at predetermined intervals, from the articles 2 of the same type and/or from the articles 2 produced by the same mold 9.

In any of the above conditions, unit 11 - given the cleaning rate of each mold 9 - determines - preferably before the glass gobs are fed into respective molds 9 - which articles 2 will be formed inside of each mold 9 immediately after the respective cleaning operation, which, as is known, may result in surface defects requiring rejection of the articles. On the basis of the output rate of molds 9, unit 11 then activates device 15 to successively feed at least some of the potentially defective articles 2 into station 13, while allowing the other articles 2 to proceed to annealing furnace 4.

Similarly, unit 11 - on the basis of signals from the temperature sensors of each mold 9 - determines - before articles 2 are transferred onto conveyor 5 - which articles 2 are produced in varying operating temperature conditions of respective molds 9, which, as is known, may also result in potentially defective, i.e. nonhomogeneous, articles requiring rejection. In this case also, given the output rate of machine 3 and the location of the mold/s 9 operating in varying temperature conditions, unit 11 activates device 15 to feed at least some of the potentially defective articles 2 into weighing station 13.

Unlike known solutions, machine 3 as described, and in particular the location of weighing unit 12 immediately downstream from molds 9, therefore provides for weighing any of articles 2 carried on conveyor 5, regardless of the relative positions of articles 2. That is, on the way to furnace 4, each article 2 travels past the input 13a of weighing station 13, and may therefore be fed into station 13 by device 15.

Moreover, the very small distance between weighing station 13 and molds 9 provides for greatly reducing the number of articles 2 on conveyor 5 between molds 9 and weighing station 13, and therefore for greatly reducing, as compared with known solutions, the number of articles 2 rejected in the event the weight of the weighed article fails to fall within the given acceptance range.

Moreover, the very small distance between weighing station 13 and molds 9 also provides, as compared with known solutions, for improving the quality of the finished product by enabling far more rapid confirmation of any corrections. This is mainly due to the fact that, unlike known weighing systems in which a fairly long interval occurs between transmission of the weight correction signal and the article 2 affected by the correction reaching the weighing station, the interval on machine 3 is greatly reduced by the weighing station being located adjacent to molds 9, so that a number of successive corrections, each based on the outcome of previous corrections, may be performed within the same interval.

Finally, controlling weighing unit 12 directly by means of unit 11 controlling and synchronizing the whole of machine 3 provides, not only for selecting the weighing rate, but also for selecting beforehand which articles 2 are to be weighed.

In particular, the data in unit 11 provides, as of formation of the gobs, for determining, from the articles formed after the molds are cleaned or in "cold mold" conditions, specific articles which, though eventually rejected by normally comprising defects in structure, shape and/or appearance, may safely be weighed without impairing the accuracy of the weighing operation.

As such, since the weighed articles 2 on machine 3 are subsequently rejected, weighing potentially faulty articles provides for salvaging the sound articles 2 and so reducing production cost alongside an increase in output.

Clearly, changes may be made to machine 3 as described and illustrated herein without, however, departing from the scope of the claims. In particular, the location of weighing station 13 may differ from that shown by way of example, while still being adjacent to molds 9 and transfer devices 10.

Moreover, machine 3 may comprise detecting devices, e.g. optical detecting devices, connected to unit 11 to detect any defects in the appearance of articles 2; and unit 11 may be so programmed as to activate device 15 as to so transfer any articles 2 featuring such defects through the input 13a of weighing station 13.

## Claims

1. A method of producing glass articles, the method comprising the steps of successively forming a number of glass articles (2) by means of a number of molds (9); transferring the glass articles (2) from said molds (9) onto a common moving conveyor (5) for conveying the glass articles (2); and successively feeding some of said glass articles (2) from said conveyor (5) to a weighing station (13) for weighing the glass articles (2); **characterized by** the further steps of
(a) selecting, before the glass articles (2) are transferred onto the conveyor (5), said some of the glass articles (2) to be fed to the weighing station (13);
(b) successively conveying the glass articles (2) past an input (13a) of said weighing station (13) whereby said selected some of the glass articles (2) are fed successively through said input (13a) into the adjoining weighing station (13); and
(c) the weighed glass articles (2) traveling away from the weighing station (13) along a path (18) other than the path (6) traveled by the unweighed articles (2).

2. A method as claimed in Claim 1, **characterized in that** glass articles (2) to be fed to the weighing station (13) are selected prior to formation of glass articles (2) in the respective molds (9).

3. A method as claimed in Claim 1 or 2, **characterized in that** said selection is made by determining, for each said mold (9), at least one glass article (2) to be weighed.

4. A method as claimed in claim 3, **characterized in that** said selection comprises the periodical withdrawal of glass articles (2) produced by each of said molds (9).

5. A method as claimed in Claim 3 or 4, **characterized in that** said selection comprises the step of determining potentially defective glass articles (2) from all the glass articles (2) produced by each of said molds (9).

6. A method as claimed in Claim 5, **characterized in that** said selection is made by determining the glass articles (2) formed immediately after cleaning the molds (9).

7. A method as claimed in Claim 5, **characterized in that** said selection is made by determining the glass articles (2) formed during a variation in the operating temperature of the molds (9).

8. A method as claimed in any one of the foregoing Claims from 1 to 7, **characterized in that** selection of the glass articles (2) to be weighed and transfer of the glass articles (2) to be weighed to said weighing station (13) are performed automatically and controlled by an. electronic unit (11) for controlling formation of the glass articles (2) in said molds (9).

9. A machine for producing glass articles, the machine comprising a number of molds (9), each for successively forming a number of glass articles (2); a conveyor (5) common to all the molds (9) and movable for conveying the glass articles (2) along a predetermined path (6); first transfer means (10) for transferring the glass articles (2) from the molds (9) onto said common conveyor (5); weighing means (12) for weighing selected some glass articles (2) conveyed by said conveyor (5); said weighing means (12) comprising a weighing station (13) having a respective input (13a) and housing a weighing device (14); and second transfer means (15) for successively transferring said selected some glass articles (2) from the conveyor (5) to the weighing station (13); **characterized in that** said weighing station (13) is located immediately downstream from the last of both said molds (9) and said first transfer means (10); the input (13a) of the weighing station (13) being also located adjoining one side of said conveyor (5); and **in that** said second transfer means (15) are operated so as to transfer the glass articles (2) to be weighed from the conveyor (5) through said input (13a) of the weighing station (13); said weighing device (14) being adapted to feed the weighed glass articles (2) along a path (18) different from said predetermined path (6). .

10. A machine as claimed in Claim 9, **characterized in that** said weighing station (13) is located on the side of said conveyor (5) opposite to said molds (9), said different path (18) being a vertical unloading path toward a collecting bin (17).

11. A machine as claimed in Claim 9 or 10, **characterized in that** said second transfer means comprise pneumatic shift means (15) adapted to be controlled by an electronic unit (11) for so transferring said selected some glass articles (2).

12. A machine as claimed in any Claim form 9 to 11, **characterized by** forming means (7) for forming a succession of glass gobs; and distributing means (8) for feeding the glass gobs into respective molds (9) according a given distribution sequence; said electronic unit (11) also controlling and synchronizing said forming means (7), said distributing means (8) and said weighing means (12).

13. A machine as claimed in Claim 12, **characterized by** automatic cleaning or lubricating means (19) adapted to be controlled by said electronic unit (11) for cleaning or lubricating each of said molds (9) in synchronism with said forming means (7) and said distributing means (8).

## Patentansprüche

1. Verfahren zur Herstellung von Glasartikeln, wobei das Verfahren die Schritte aufeinander folgendes Formen einer Anzahl von Glasartikeln (2) mittels einer Anzahl von Gießformen (9); Übertragen der Glasartikel (2) von den Gießformen (9) auf einen gemeinsamen sich bewegenden Förderer (5) zum Transportieren der Glasartikel (2) ; und aufeinander folgendes Zuführen einiger der Glasartikel (2) von dem Förderer (5) zu einer Wiegestation (13) zum Wiegen der Glasartikel (2) aufweist; **gekennzeichnet durch** die weiteren Schritte
(a) Auswählen der einigen der Glasartikel (2), bevor die Glasartikel (2) auf den Förderer (5) übertragen werden, um der Wiegestation (13) zugeführt zu werden;
(b) aufeinander folgendes Transportieren der Glasartikel (2) an einem Eingang (13a) der Wiegestation (13) vorbei, wodurch die ausgewählten einigen der Glasartikel (2) aufeinander folgend über den Eingang (13a) in die angrenzende Wiegestation (13) hinein geführt werden; und
(c) Bewegen der gewogenen Glasartikel (2) weg von der Wiegestation (13) entlang eines anderen Pfades (18) als dem Pfad (6), der von den ungewogenen Artikeln (2) zurückgelegt wird.

2. Verfahren nach Anspruch 1, **dadurch gekennzeichnet, dass** Glasartikel (2), die zu der Wiegestation (13) zu führen sind, vor der Formung von Glasartikeln (2) in den jeweiligen Gießformen (9) ausgewählt werden.

3. Verfahren nach Anspruch 1 oder 2, **dadurch gekennzeichnet, dass** die Auswahl für jede Gießform (9) durch Bestimmen wenigstens eines zu wiegenden Glasartikels (2) vorgenommen wird.

4. Verfahren nach Anspruch 3, **dadurch gekennzeichnet, dass** die Auswahl die periodische Zurücknahme von Glasartikeln (2) umfasst, die von jeder der Gießformen (9) erzeugt werden.

5. Verfahren nach Anspruch 3 oder 4, **dadurch gekennzeichnet, dass** die Auswahl den Schritt Bestimmen potentiell fehlerhafter Glasartikel (2) aus jedem der Glasartikel (2) umfasst, die von jeder der Gießformen (9) erzeugt werden.

6. Verfahren nach Anspruch 5, **dadurch gekennzeichnet, dass** die Auswahl durch Bestimmen der Glasartikel (2) vorgenommen wird, die sofort nach der Reinigung der Gießformen (9) geformt werden.

7. Verfahren nach Anspruch 5, **dadurch gekennzeichnet, dass** die Auswahl durch Bestimmen der Glasartikel (2) vorgenommen wird, die während einer Variation in der Betriebstemperatur der Gießformen (9) geformt werden.

8. Verfahren nach einem der vorhergehenden Ansprüche von 1 bis 7, **dadurch gekennzeichnet, dass** die Auswahl der zu wiegenden Glasartikel (2) und die Übertragung der zu wiegenden Glasartikel (2) auf die Wiegestation (13) automatisch durchgeführt und von einer elektronischen Einheit (11) zur Steuerung der Formung der Glasartikel (2) in den Gießformen (9) gesteuert werden.

9. Maschine zur Herstellung von Glasartikeln, wobei die Maschine eine Anzahl von Gießformen (9) jeweils zum aufeinander folgenden Formen einer Anzahl von Glasartikeln (2); einen Förderer (5) gemeinsam mit jeder der Gießformen (9) und bewegbar zum Transportieren der Glasartikel (2) entlang eines vorbestimmten Pfades (6); erste Übertragungsmittel (10) zum Übertragen der Glasartikel (2) von den Gießformen (9) auf den gemeinsamen Förderer (5); Wiegemittel (12) zum Wiegen einiger ausgewählter Glasartikel (2), die von dem Förderer (5) transportiert werden; wobei die Wiegemittel (12) eine Wiegestation (13) aufweisen, die einen jeweiligen Eingang (13a) hat und eine Wiegevorrichtung (14) unterbringt; und zweite Übertragungsmittel (15) zum aufeinander folgenden Übertragen der einigen ausgewählten Glasartikel (2) von dem Förderer (5) auf die Wiegestation (13) aufweist; **dadurch gekennzeichnet, dass** die Wiegestation (13) von den letzten beiden der Gießformen (9) und den ersten Übertragungsmitteln (10) sofort abfallend angeordnet ist; der Eingang (13a) der Wiegestation (13) auch angrenzend an der einen Seite des Förderers (5) angeordnet ist; und dass die zweiten Übertragungsmittel (15) betrieben werden, um die zu wiegenden Glasartikel (2) von dem Förderer (5) durch den Eingang (13a) der Wiegestation (13) hindurch zu übertragen; wobei die Wiegevorrichtung (14) angepasst ist, die gewogenen Glasartikel (2) entlang eines Pfades (18) zu führen, der von dem vorbestimmten Pfad (6) abweicht.

10. Maschine nach Anspruch 9, **dadurch gekennzeichnet, dass** die Wiegestation (13) an der Seite des Förderers (5) gegenüber den Gießformen (9) angeordnet ist, wobei der abweichende Pfad (18) ein vertikaler Entladungspfad zu einem Sammelbehälter (17) hin ist.

11. Maschine nach Anspruch 9 oder 10, **dadurch gekennzeichnet, dass** die zweiten Übertragungsmittel pneumatische Schaltmittel (15) aufweisen, die angepasst sind, von einer elektronischen Einheit (11) gesteuert zu werden, um die einigen ausgewählten Glasartikel (2) so zu übertragen.

12. Maschine nach einer Anspruchsform 9 bis 11, **gekennzeichnet durch** Formungsmittel (7) zum Formen einer Folge von Glasposten; und Verteilungsmittel (8) zum Zuführen der Glasposten in jeweilige Gießformen (9) hinein entsprechend einer gegebenen Verteilungsfolge; wobei die elektronische Einheit (11) auch die Formungsmittel (7), die Verteilungsmittel (8) und die Wiegemittel (12) steuert und synchronisiert.

13. Maschine nach Anspruch 12, **gekennzeichnet durch** automatische Reinigungs- oder Schmierungsmittel (19), die angepasst sind, von der elektronischen Einheit (11) zum Reinigen oder Schmieren jeder der Gießformen (9) im Gleichlauf mit den Formungsmitteln (7) und den Verteilungsmitteln (8) gesteuert zu werden.

## Revendications

1. Procédé de fabrication d'objets en verre, le procédé comportant les étapes consistant à former successivement plusieurs objets en verre (2) au moyen de plusieurs moules (9); à transférer les objets en verre (2) desdits moules (9) sur un convoyeur mobile commun (5) pour transporter les objets en verre (2); et à amener successivement certains desdits objets en verre (2) dudit convoyeur (5) à un poste de pesage (13) pour peser les objets en verre (2); **caractérisé par** les étapes supplémentaires consistant à
(a) sélectionner, avant que les objets en verre (2) ne soient transférés sur le convoyeur (5), lesdits certains des objets en verre (2) devant être amenés au poste de pesage (13);
(b) transporter successivement les objets en verre (2) devant une entrée (13a) dudit poste de pesage (13), de sorte que lesdits certains objets sélectionnés parmi les objets en verre (2) sont amenés successivement à travers ladite entrée (13a) dans le poste de pesage contigu (13); et
(c) éloigner les objets en verre pesés (2) du poste de pesage (13) le long d'un trajet (18) autre que le trajet (6) emprunté par les objets non pesés (2).

2. Procédé selon la revendication 1, **caractérisé en ce que** les objets en verre (2) devant être amenés au poste de pesage (3) sont sélectionnés avant la formation d'objets en verre (2) dans les moules respectifs (9).

3. Procédé selon la revendication 1 ou 2, **caractérisé en ce que** ladite sélection est effectuée en déterminant, pour chacun desdits moules (9), au moins un objet en verre (2) devant être pesé.

4. Procédé selon la revendication 3, **caractérisé en ce que** ladite sélection comporte le retrait périodique d'objets en verre (2) fabriqués par chacun desdits moules (9).

5. Procédé selon la revendication 3 ou 4, **caractérisé en ce que** ladite sélection comporte l'étape consistant à déterminer des objets en verre (2) potentiellement défectueux parmi tous les objets en verre (2) fabriqués par chacun desdits moules (9).

6. Procédé selon la revendication 5, **caractérisé en ce que** ladite sélection est effectuée en déterminant les objets en verre (2) formés immédiatement après nettoyage des moules (9).

7. Procédé selon la revendication 5, **caractérisé en ce que** ladite sélection est effectuée en déterminant les objets en verre (2) formés pendant une variation de la température de fonctionnement des moules (9).

8. Procédé selon l'une quelconque des revendications précédentes 1 à 7, **caractérisé en ce que** la sélection des objets en verre (2) devant être pesés et le transfert des objets en verre (2) devant être pesés audit poste de pesage (13) sont effectués automatiquement et sont commandés par une unité électronique (11) pour commander la formation des objets en verre (2) dans lesdits moules (9).

9. Machine de fabrication d'objets en verre, la machine comportant plusieurs moules (9), chacun destiné à former successivement plusieurs objets en verre (2); un convoyeur (5) commun à tous les moules (9) et mobile pour transporter les objets en verre (2) le long d'un trajet prédéterminé (6); des premiers moyens de transfert (10) pour transférer les objets en verre (2) des moules (9) sur ledit convoyeur commun (5); des moyens de pesage (12) pour peser certains objets en verre sélectionnés (2) transportés par ledit convoyeur (5); lesdits moyens de pesage (12) comportant un poste de pesage (13) ayant une entrée respective (13a) et logeant un dispositif de pesage (14); et des seconds moyens de transfert (15) pour transférer successivement lesdits certains objets en verre sélectionnés (2) du convoyeur (5) au poste de pesage (13); **caractérisée en ce que** ledit poste de pesage (13) est situé immédiatement en aval du dernier parmi lesdits moules (9) et lesdits premiers moyens de transfert (10); l'entrée (13a) du poste de pesage (13) étant également située au voisinage d'un côté dudit convoyeur (5); et **en ce que** lesdits seconds moyens de transfert (15) sont actionnés de manière à transférer les objets en verre (2) devant être pesés du convoyeur (5) à travers ladite entrée (13a) du poste de pesage (13); ledit dispositif de pesage (14) étant adapté pour amener les objets en verre pesés (2) le long d'un trajet (18) différent dudit trajet prédéterminé (6).

10. Machine selon la revendication 9, **caractérisée en ce que** ledit poste de pesage (13) est situé sur le côté dudit convoyeur (5) opposé auxdits moules (9), ledit trajet différent (18) étant un trajet de déchargement vertical vers un bac de collecte (17).

11. Machine selon la revendication 9 ou 10, **caractérisée en ce que** lesdits seconds moyens de transfert comportent des moyens de décalage pneumatiques (15) adaptés pour être commandés par une unité électronique (11) pour transférer ainsi lesdits certains objets en verre sélectionnés (2).

12. Machine selon l'une quelconque des revendications 9 à 11, **caractérisée par** des moyens de formage (7) pour former une succession de paraisons de verre, et des moyens de distribution (8) pour amener les paraisons de verre dans des moules respectifs (9) selon une séquence de distribution donnée, ladite unité électronique (11) commandant et synchronisant également lesdits moyens de formage (7), lesdits moyens de distribution (8) et lesdits moyens de pesage (12).

13. Machine selon la revendication 12, **caractérisée par** des moyens de nettoyage ou de lubrification automatiques (19) adaptés pour être commandés par ladite unité électronique (11) afin de nettoyer ou de lubrifier chacun desdits moules (9) en synchronisme avec lesdits moyens de formage (7) et lesdits moyens de distribution (8).
